# EUROPEAN PATENT SPECIFICATION

(11) **EP 2 670 635 B1**
(45) Date of publication and mention of the grant of the patent: **27.06.2018**
(21) Application number: 11701676.6
(22) Date of filing: 01.02.2011
(51) Int. Cl.: B60S 1/38

(54) **A WINDSCREEN WIPER DEVICE**
SCHEIBENWISCHERVORRICHTUNG
DISPOSITIF D'ESSUIE-GLACE

(43) Date of publication of application: 11.12.2013
(73) Proprietor: Federal-Mogul S.A., 6790 Aubange (BE)
(72) Inventor: FRISCIONI, Thomas, F-57710 Aumetz (FR)
(74) Representative: Hooiveld, Arjen Jan Winfried
(86) International application number: PCT/EP2011/051415
(87) International publication number: WO 2012/103939

(56) References cited:
- DE-A1- 10 309 080
- DE-A1-102006 038 828
- DE-U1-202009 013 452
- JP-A- 2007 210 518
- US-A1- 2009 158 545

## Description

The present invention relates to a method for manufacturing a windscreen wiper device of the flat blade type comprising an elastic, elongated carrier element, as well as an elongated wiper blade, which can be placed in abutment with a windscreen to be wiped, said wiper blade comprising an elongated upper holding part and an elongated lower wiping part of a flexible material, wherein said upper holding part holds said wiping part and is provided with at least one longitudinal groove, in which groove at least one longitudinal strip of the carrier element is disposed, wherein said wiper blade comprises a spoiler at a side of said upper holding part facing away from said lower wiping part, which windscreen wiper device further comprises a connecting device for an oscillating arm, wherein said oscillating arm can be pivotally connected to said connecting device about a pivot axis near one end thereof, with the interposition of a joint part.

Such a windscreen wiper device is generally known. The prior art windscreen wiper device is in particular designed as a "yokeless" wiper device or "flat blade", wherein use is no longer made of several yokes pivotally connected to each other, but wherein the wiper blade is biased by often two longitudinal strips of the carrier element, as a result of which it exhibits a specific curvature. According to the prior art a connecting piece (in practice also called an "end cap") is slided over neighboring ends of said strips - or vice versa, that is the neighboring ends of said strips are slided into said connecting piece - so that a reliable snap connection between these parts is realized. In the prior art said connecting piece is provided with an opening at its free end so that the wiper blade can freely slide through said connecting piece. In other words, the connecting pieces do not retain the wiper blade, so that said connecting pieces allow a relative movement of the wiper blade along the longitudinal strips in the connecting pieces.

One drawback of the prior art windscreen wiper device is the fact that, during oscillatory movements of the wiper blade, the connecting pieces may touch the respective A-pillars of the vehicle concerned, resulting in a rattling noise, air turbulence and sometimes in damages to the connecting pieces and/or longitudinal strips. As a result, the wiping properties may deteriorate, whereas the wiper blade may come loose from the connecting pieces, particularly when the wiper blade and the connecting pieces are not connected in a durable, solid manner. Hence, the life span of the prior art windscreen wiper device may be seriously shortened. US-A-3317945 shows the preamble of claim 1. The object of the invention is to improve the prior art as indicated above, in particular to provide a windscreen wiper device, wherein the wiping properties are improved. According to the invention, lateral sides of said holding part, at a location of its free end facing towards an A-pillar of the windscreen to be wiped, is provided with a beveled surface having its lowest width facing towards said free end. Particularly, the ratio between the highest width of said holding part at a location facing away from said free end and the lowest width of said holding part at a location facing towards said free end varies between 25 and 8, particularly between 20 and 8. According to the invention, the lateral sides of said holding part are cut to obtain the beveled surface.

It is noted that the present invention is not restricted to windscreen wiper devices for cars, but that it also relates to windscreen wiper devices for rail coaches and all other (fast) vehicles. According to the invention a free end of said spoiler, facing towards an A-pillar of the windscreen to be wiped, is provided with a beveled surface, wherein the height of said spoiler decreases along said beveled surface, seen from the windscreen to be wiped. Preferably, the ratio between the height of said spoiler at a side thereof facing away from the windscreen to be wiped and the height of said spoiler at a side thereof facing towards the windscreen to be wiped varies between 35 and 5, particularly between 22 and 8. According to the invention the free end of said spoiler is cut to obtain the beveled surface.

In a further preferred embodiment of a windscreen wiper device in accordance with the invention the wiper blade does not comprise a connecting piece at its end facing towards an A-pillar of the windscreen to be wiped. Consequently, the free end of said spoiler and the lateral sides of said holding part do not contain any end cap.

The invention will now be explained in more detail with reference to figures illustrated in a drawing, wherein:
- figure 1 is a total perspective, schematic view of a windscreen wiper device according to the invention;
- figures 2, 3 and 4 are a perspective view and side views of parts of a wiper blade equipped with a spoiler, as used in the windscreen wiper device of figure 1; and

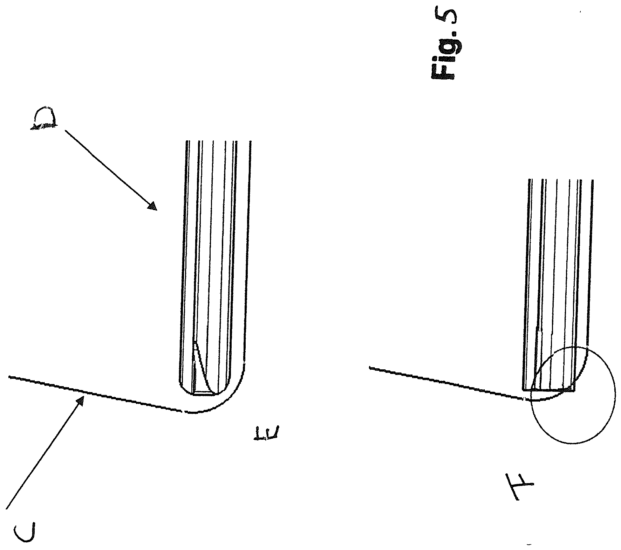

- figure 5 shows the effect of the invention (above) compared to the prior art (below).

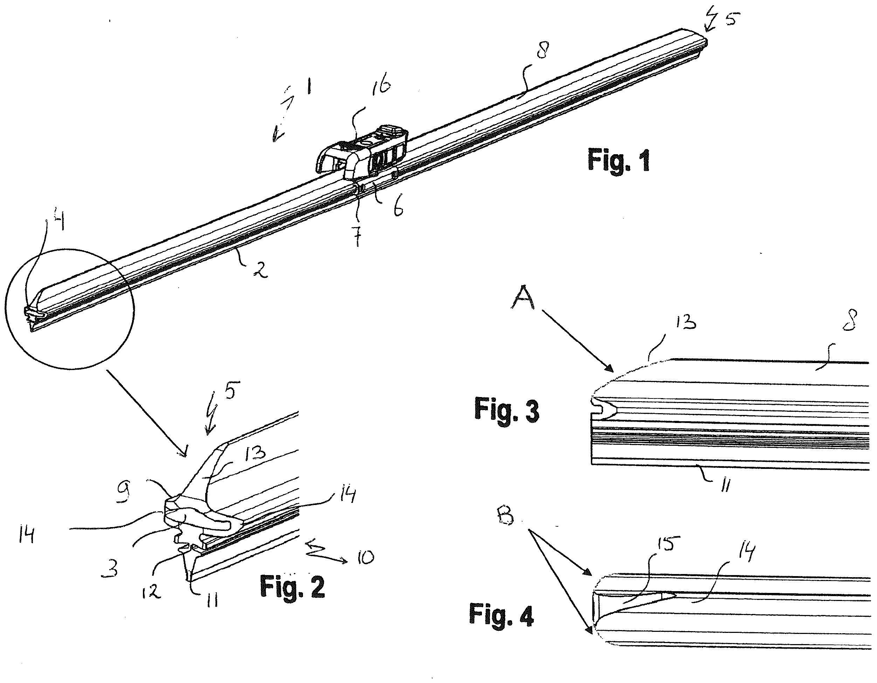

Figure 1 shows a preferred variant of a windscreen wiper device 1 according to the invention. Said windscreen wiper device 1 is built up of an elastomeric wiper blade 2, wherein a central longitudinal groove 3 is formed, and of a central longitudinal strip 4 made of spring band steel, which is fitted in said longitudinal groove 3. Said strip 4 forms a flexible carrier element for the rubber wiper blade 2, as it were, which is thus biased in a curved position (the curvature in operative position being that of a windscreen to be wiped). Free ends 5 of the strip 4 and/or wiper blade 2 remain free, that is there are no connecting pieces or end caps connected thereto on either side of the windscreen wiper device 1. The windscreen wiper device 1 is furthermore built up of a connecting device 6 of plastic or metal material for an oscillating wiper arm. Connecting device 6 comprises clamping members 7 that are integral therewith, which engage round longitudinal sides of the wiper blade 2 that face away from each other, as a result of which the connecting device 6 is firmly attached to the unit consisting of wiper blade 2 and strip 4. The oscillating wiper arm is pivotally connected to the connecting device 6 about a pivot axis near one end, with the interposition of a joint part 16. The preferred embodiment of figure 1 according to the invention comprises a spoiler or "air deflector" 8 connected in its entirety to the wiper blade 2, wherein said spoiler 8 and said wiper blade 2 are in one piece.

In figures 2, 3 and 4 a perspective view and side views of the wiper blade 2 of figure 1 is shown, wherein corresponding parts have been designated with the same reference numerals. As can be seen from figure 2, said rubber wiper blade 2 consists of an elongated upper holding part 9 holding said longitudinal strip 4 in said groove 3 formed therein, an elongated lower wiping part 10 having a wiping lip 11, as well as an intermediate "strip-like" titling web 12 interconnecting said holding part 9 and said wiping part 10. Said holding part 9, said wiping part 10 and said tilting web 12 are in one piece of rubber. As can be seen in figure 2, said wiper blade 2 comprises a spoiler 8 at a side thereof facing away from the windscreen to be wiped, wherein a free end of said spoiler 8, facing towards an A-pillar of the windscreen to be wiped, is provided with a beveled surface 13. As shown, the height of said spoiler 8 decreases along said beveled surface 13, seen from the windscreen to be wiped. Further, lateral sides 14 of said holding part 9, at a location of its free end facing towards the A-pillar of the windscreen to be wiped, is also provided with a beveled surface 15. Said lateral sides 14 of said holding part 9 are cut to obtain the beveled surface 15.

Although not shown in figures 1 and 2, but fully understood by a skilled person, said oscillating arm is connected to a mounting head fixed for rotation to a shaft driven by a small motor. In use, the shaft rotates alternately in a clockwise and in a counter-clockwise sense carrying the mounting head into rotation also, which in turn draws said oscillating arm into rotation and by means of said connecting device 6 moves said wiper blade 2.

The invention is not restricted to the embodiments shown, but also extends to other preferred embodiments falling within the scope of the appended claims.

### References to figures

- A =: Curve Cutting
- B =: Radius Cutting
- C =: Screen edge
- D =: Blade extremity
- E =: OK
- F =: NOK

## Claims

1. A method for manufacturing a windscreen wiper device (1) of the flat blade type comprising an elastic, elongated carrier element, as well as an elongated wiper blade (2), which can be placed in abutment with a windscreen to be wiped, said wiper blade (2) comprising an elongated upper holding part (9) and an elongated lower wiping part (10) of a flexible material, wherein said upper holding part (9) holds said wiping part (10) and is provided with a central longitudinal groove (3), in which groove (3) a central longitudinal strip (4) of the carrier element is disposed, wherein said wiper blade (2) comprises a spoiler (8) at a side of said upper holding part (9) facing away from said lower wiping part (10), which windscreen wiper device (1) further comprises a connecting device (6) for an oscillating arm, wherein said oscillating arm can be pivotally connected to said connecting device (6) about a pivot axis near one end thereof, with the interposition of a joint part (16), wherein lateral sides (14) of said holding part (9), at a location of its free end facing towards an A-pillar of the windscreen to be wiped, is provided with a beveled surface (15) having its lowest width facing towards said free end, wherein a free end of said spoiler (8) facing towards an A-pillar of the windscreen to be wiped, is provided with a beveled surface (13), wherein the height of said spoiler (8) decreases along said beveled surface (13), seen from the windscreen to be wiped, wherein said upper holding part (9), said lower wiping part (10) and said spoiler (8) are in one piece of rubber, **characterized in that** the lateral sides (14) of said holding part (9) are cut to obtain the beveled surface (15) and the free end of said spoiler (8) is cut to obtain the beveled surface (13).

2. A method according to claim 1, wherein the ratio between the highest width of said holding part (9) at a location facing away from said free end varies and the lowest width of said holding part (9) at a location facing towards said free end between 25 and 8, particularly between 20 and 8.

3. A method according to claim 1 or 2, wherein the ratio between the height of said spoiler at a side thereof facing away from the windscreen to be wiped and the height of said spoiler (8) at a side thereof facing towards the windscreen to be wiped, varies between 35 and 5, particularly between 22 and 8.

4. A method according to claim 1, 2 or 3, wherein the free end of said wiper blade (2) does not comprise a connecting piece or "end cap".

## Patentansprüche

1. Verfahren zur Herstellung einer Scheibenwischvorrichtung (1) vom flachen Blatttyp, die ein elastisches, längliches Trägerelement sowie ein längliches Wischerblatt (2), das in Anlage mit einer zu wischenden Windschutzscheibe gebracht werden kann, aufweist, wobei das Wischerblatt (2) einen länglichen oberen Halteteil (9) und einen länglichen unteren Wischteil (10) aus einem flexiblen Material umfasst, wobei der obere Halteteil (9) den Wischteil (10) hält und mit einer mittleren Längsnut (3) versehen ist, wobei in der Längsnut (3) ein mittlerer Längsstreifen (4) des Trägerelements angeordnet ist, wobei das Wischerblatt (2) einen Spoiler (8) an einer Seite des oberen Halteteils (9), die weg von dem unteren Wischteil (10) zeigt, umfasst, wobei die Scheibenwischvorrichtung (1) ferner eine Verbindungsvorrichtung (6) für einen Schwenkarm umfasst, wobei der Schwenkarm mit der Verbindungsvorrichtung (6), unter Zwischenanordnung eines Gelenkteils (16), um eine Schwenkachse nahe einem Ende davon schwenkbar verbunden werden kann, wobei laterale Seiten (14) des Halteteils (9), an einer Stelle von dessen freiem Ende, das in Richtung einer A-Säule der zu wischenden Windschutzscheibe zeigt, mit einer abgeschrägten Fläche (15) versehen werden, die ihre geringste Breite in Richtung des freien Endes zeigend aufweist,
wobei ein freies Ende des Spoilers (8), das in Richtung einer A-Säule der zu wischenden Windschutzscheibe zeigt, mit einer abgeschrägten Fläche (13) versehen wird, wobei die Höhe des Spoilers (8), von der zu wischenden Windschutzscheibe aus betrachtet, entlang der abgeschrägten Fläche (13) abnimmt,
wobei der obere Halteteil (9), der untere Wischteil (10) und der Spoiler (8) in einem Gummistück vorliegen, **dadurch gekennzeichnet, dass** die lateralen Seiten (14) des Halteteils (9) geschnitten werden, um die abgeschrägte Fläche (15) zu erhalten, und das freie Ende des Spoilers (8) geschnitten wird, um die abgeschrägte Fläche (13) zu erhalten.

2. Verfahren nach Anspruch 1, wobei das Verhältnis zwischen der größten Breite des Halteteils (9) an einer Stelle, die weg von dem freien Ende zeigt, und der geringsten Breite des Halteteils (9) an einer Stelle, die in Richtung des freien Endes zeigt, zwischen 25 und 8, insbesondere zwischen 20 und 8, variiert.

3. Verfahren nach Anspruch 1 oder 2, wobei das Verhältnis zwischen der Höhe des Spoilers an einer Seite davon, die weg von der zu wischenden Windschutzscheibe zeigt, und der Höhe des Spoilers (8) an einer Seite davon, die in Richtung der zu wischenden Windschutzscheibe zeigt, zwischen 35 und 5, insbesondere zwischen 22 und 8, variiert.

4. Verfahren nach Anspruch 1, 2 oder 3, wobei das freie Ende des Wischerblatts (2) kein Verbindungsstück oder keine "Endkappe" umfasst.

## Revendications

1. Procédé destiné à fabriquer un dispositif de balai d'essuie-glace (1) du type à lame plate qui comprend un élément porteur allongé et élastique, ainsi qu'une lame de balai allongée (2), qui peut être placée en butée contre un pare-brise à essuyer, ladite lame de balai (2) comprenant une partie maintien supérieure allongée (9), et une partie essuyage inférieure allongée (10) réalisée dans un matériau souple, dans lequel ladite partie maintien supérieure (9) maintient ladite partie essuyage (10), et est dotée d'une rainure longitudinale centrale (3), rainure (3) dans laquelle est disposée une bande longitudinale centrale (4) de l'élément porteur, dans lequel ladite lame de balai (2) comprend un déflecteur (8) au niveau d'un côté de ladite partie maintien supérieure (9) qui fait face en s'éloignant de ladite partie essuyage inférieure (10), lequel dispositif de balai d'essuie-glace (1) comprend en outre un dispositif de connexion (6) d'un bras oscillant, dans lequel ledit bras oscillant peut être connecté de manière pivotante audit dispositif de connexion (6) autour d'un axe de pivot à proximité d'une extrémité de celui-ci, avec l'interposition d'une partie joint (16), dans lequel les côtés latéraux (14) de ladite partie de maintien (9), au niveau de l'emplacement de son extrémité libre qui fait face à un montant A du pare-brise à essuyer, sont dotés d'une surface biseautée (15) dont la largeur la plus basse fait face à ladite extrémité libre ;
dans lequel une extrémité libre dudit déflecteur (8) qui fait face à un montant A du pare-brise à essuyer, est dotée d'une surface biseautée (13), dans lequel la hauteur dudit déflecteur (8) diminue le long de ladite surface biseautée (13), quand on regarde à partir du pare-brise à essuyer ;
dans lequel ladite partie maintien supérieure (9), ladite partie essuyage inférieure (10) et ledit déflecteur (8) sont réalisés d'une seule pièce en caoutchouc, **caractérisé en ce que** les côtés transversaux (14) de ladite partie maintien (9) sont coupés de façon à obtenir la surface biseautée (15), et l'extrémité libre dudit déflecteur (8) est coupée de façon à obtenir la surface biseautée (13).

2. Procédé selon la revendication 1, dans lequel le rapport entre la largeur la plus élevée de ladite partie maintien (9) au niveau de l'emplacement qui fait face en s'éloignant de ladite extrémité libre, sur la largeur la plus basse de ladite partie maintien (9) au niveau de l'emplacement qui fait face à ladite extrémité libre, varie entre 25 et 8, en particulier entre 20 et 8.

3. Procédé selon la revendication 1 ou la revendication 2, dans lequel le rapport de la hauteur dudit déflecteur au niveau d'un côté de celui-ci qui fait face en s'éloignant du pare-brise à essuyer, sur la hauteur dudit déflecteur (8) au niveau d'un côté de celui-ci qui fait face au pare-brise à essuyer, varie entre 35 et 5, en particulier entre 22 et 8.

4. Procédé selon l'une quelconque des revendications 1 à 3, dans lequel l'extrémité libre de ladite lame de balai (2) ne comprend pas d'élément de connexion ni de « bouchon d'extrémité ».
